# EUROPÄISCHE PATENTANMELDUNG

(11) **EP 4 270 695 A1**
(43) Veröffentlichungstag der Anmeldung: **01.11.2023**
(21) Anmeldenummer: 23169668.3
(22) Anmeldetag: 25.04.2023
(51) Int. Cl.: H02G 3/00, H02G 3/30, E04B 9/16, H02G 3/04

(54) **BEFESTIGUNGSKLAMMER FÜR EIN LANGELEMENT, INSBESONDERE EIN KABELTRAGSYSTEM SOWIE KABELTRAGSYSTEM MIT EINER SOLCHEN BEFESTIGUNGSKLAMMER**

(30) Priorität: 26.04.2022 DE 202022102227 U
(71) Anmelder: OBO Bettermann Produktion Deutschland GmbH & Co.KG, 58710 Menden (DE)
(72) Erfinder: Hinz, Robin, 58730 Fröndenberg (DE)
(74) Vertreter: Haverkamp Patentanwälte PartG mbB

(57) **Zusammenfassung**

Die Erfindung betrifft eine Befestigungsklammer 1 für ein Tragsystem mit einer ein Langelement, etwa einem Kabelträger 2, 2a, tragenden Tragvorrichtung 3, wobei die Befestigungsklammer 1 einen Einhakabschnitt 4 mit einem davon abragenden Abstützabschnitt 6, 7 zum Eingreifen in die Tragvorrichtung 3 oder zum Untergreifen der Tragvorrichtung 3 aufweist, welcher Abstützabschnitt 6, 7 zum formschlüssigen Abstützen der Befestigungsklammer 1 an der Tragvorrichtung 3 in Klammerrichtung 8 ausgelegt ist, wobei die Befestigungsklammer 1 einen Biegeabschnitt 5 aufweist, der mit dem Abstützabschnitt 6, 7 in vorgesehener Klammerrichtung 8 der Befestigungsklammer 1 zumindest abschnittsweise fluchtet und bei einer Montage zum Befestigen eines Langelementes an einer Tragvorrichtung 3 bei in die Tragvorrichtung 3 eingreifenden oder diese untergreifenden Abstützabschnitt 6, 7 über einen oberen Abschluss 14, 14.1 des Langelementes unter plastischer Deformation gebogen wird.

Besonderes Kennzeichen ist, dass der Abstützabschnitt 6, 7 von dem Einhakabschnitt 4 quer zur vorgesehenen Biegung des Biegeabschnittes 5 abragt.

## Beschreibung

Die Erfindung betrifft eine Befestigungsklammer für ein Tragsystem mit einer ein Langelement, etwa einem Kabelträger, tragenden Tragvorrichtung, wobei die Befestigungsklammer einen Einhakabschnitt mit einem davon abragenden Abstützabschnitt zum Eingreifen in die Tragvorrichtung oder zum Untergreifen der Tragvorrichtung aufweist, welcher Abstützabschnitt zum formschlüssigen Abstützen der Befestigungsklammer an der Tragvorrichtung in Klammerrichtung ausgelegt ist, wobei die Befestigungsklammer einen Biegeabschnitt aufweist, der mit dem Abstützabschnitt in vorgesehener Klammerrichtung der Befestigungsklammer zumindest abschnittsweise fluchtet und bei einer Montage zum Befestigen eines Langelementes an einer Tragvorrichtung bei in die Tragvorrichtung eingreifenden oder diese untergreifenden Abstützabschnitt über einen oberen Abschluss des Langelementes unter plastischer Deformation gebogen wird.

Die Erfindung betrifft des Weiteren ein Kabeltragsystem mit einer solchen Befestigungsklammer.

Langelemente im Sinne der Erfindung sind etwa Kabelleitungen oder Rohre. Diese Langelemente werden auf Tragvorrichtungen befestigt.

Langelemente können auch auf Kabeltragsystemen installiert werden.

Kabeltragsysteme dienen dem Tragen von Kabeln und Leitungen im Raum, typischerweise in einem Gebäude. Zum Tragen von Kabelleitungen verfügt ein Kabeltragsystem über einen Kabelträger, der einen Boden und zumindest eine, typischerweise zwei an den Boden angeschlossene Seitenwände aufweist. In den von den Seitenwänden und dem Boden begrenzten Raum können Kabel und Leitungen gelegt werden. Die Seitenwände verhindern, dass Kabel und Leitungen aus dem Kabelträger seitlich herausfallen. Ein Kabelträger kann vor diesem Hintergrund im Querschnitt U-förmig, C-förmig oder ähnlich ausgestaltet sein. Er kann etwa als Kabelrinne, Kabelleiter oder Gitterrinne ausgestaltet sein, wobei die Erfindung hierauf nicht beschränkt ist.

Ein Kabelträger ist gegenüber der Schwerkraft abgestützt; typischerweise ist eine Wand- oder Deckenmontage vorgesehen. Zum Abstützen des Kabelträgers verfügt das Kabeltragsystem über voneinander beabstandete Tragvorrichtungen. Die Tragvorrichtungen können etwa als seitlich an einer Wand oder Hängestielen befestigte Ausleger oder als von einer Decke herabhängende Sprossen/Stiele ausgebildet sein. Bei der Montage eines solchen Kabeltragsystems werden typischerweise zunächst die Tragvorrichtungen montiert und anschließend der Kabelträger an den Tragvorrichtungen befestigt.

Zum Befestigen des Kabelträgers an einer Tragvorrichtung können zusätzliche Befestigungselemente vorgesehen sein. Ein solches zusätzliches Befestigungselement ist beispielsweise in PL 70 955 Y1 offenbart. Bei diesem Befestigungselement ist vorgesehen, einen U-förmig geformten Bügel über eine als Seitenholm ausgebildete Seitenwand einer Kabelleiter, den Seitenholm einschließend, anzuordnen und unterseitig hierzu mittels einer schraubzwingenartigen Anordnung an einem Schenkel eines die Kabelleiter abstützenden I-Trägers zu befestigen.

Andere Befestigungsklammern sind in ihrem Querschnitt C-förmig: Diese werden bei der Montage elastisch aufgebogen und über die Seitenwand des Kabelträgers und unter die Tragvorrichtung oder in die Tragvorrichtung eingreifend gesteckt. Durch die Rückstellkraft der Befestigungsklammer ist die Seitenwand des Kabelträgers an der Tragvorrichtung gehalten.

Eine ähnliche Vorrichtung offenbart EP 1 107 412 B1.

Bei diesen Befestigungsarten eines Kabelträgers auf einer Tragvorrichtung ist stets nicht nur ein erhöhter Montageaufwand festzustellen, sondern auch eine genaue Tolerierung der Tragvorrichtung und der Seitenholme der Kabelträger erforderlich. Eine Anpassung auf unterschiedliche Seitenholme, insbesondere in Bezug auf ihre Höhe, sind entweder nicht vorgesehen oder nur durch zweiteilige und damit herstellungsseitig aufwändige Lösungen - wie in PL 70 955 Y1 offenbart - ermöglicht.

Aufgabe der Erfindung ist es vor diesem Hintergrund, eine Befestigungsklammer bereitzustellen, mit der vereinfacht ein Kabelträger auf einer Tragvorrichtung befestigt werden kann, wobei insbesondere Rücksicht auf unterschiedliche Seitenwandgeometrien genommen werden soll.

Gelöst wird diese Aufgabe durch eine eingangs genannte, gattungsgemäße Befestigungsklammer, bei der der Abstützabschnitt von dem Einhakabschnitt quer zur vorgesehenen Biegung des Biegeabschnittes abragt.

Ein Kabeltragsystem mit einer solchen Befestigungsklammer ist durch die Merkmale des Anspruchs 10 beschrieben.

Vorteilhafte Ausgestaltungen ergeben sich aus den abhängigen Ansprüchen und der Beschreibung.

Kern der Erfindung ist die Befestigungsklammer mit einem Biegeabschnitt auszustatten, der erst während der Montage der Befestigungsklammer über den oberen Abschluss eines Langelementes, etwa einer Seitenwand des Kabelträgers gebogen wird und hierdurch für eine Vielzahl an unterschiedlichen Seitenwandgeometrien anpassbar ist. Der obere Abschluss kann dabei das obere Ende der Seitenwand oder eine nach oben weisende wandseitige Fläche, über die der Biegeabschnitt gebogen wird, etwa der untere, nach oben weisende Teil einer Aussparung in der Seitenwand, sein.

Bei der Montage wird die Befestigungsklammer in einem ersten Schritt an der Tragvorrichtung mit dem Abstützabschnitt befestigt. Der Abstützabschnitt stützt die Befestigungsklammer formschlüssig in Klammerrichtung - also der Richtung des kürzesten Abstandes zwischen dem Kontakt Abstützabschnitt-Tragvorrichtung und oberer Abschluss des Kabelträgers - ab. Er ragt hierzu typischerweise quer zur Abstützrichtung von dem Einhakabschnitt ab, eine erste Abstützfläche in Klammerrichtung bereitstellend, und ist aus Stabilitätsgründen bevorzugt an den Einhakabschnitt angeformt. Insbesondere ist der Biegeabschnitt in Klammerrichtung steif ausgelegt, um die bei dem Biegevorgang des Biegeabschnittes in die Befestigungsklammer eingebrachte, auf den Abstützabschnitt wirkende Zugkraft auf die Tragvorrichtung zu übertragen. Hierfür weist der Abstützabschnitt in Klammerrichtung sein größtes Widerstandsmoment auf; materialsparend ist er typischerweise in Klammerrichtung größer dimensioniert als in Tiefenrichtung, mithin der Richtung, die sowohl quer zur Klammerrichtung als auch und der Abragrichtung des Abstützabschnittes von dem Einhakabschnitt ist.

Bevorzugt greift der Abstützabschnitt in einen Abschnitt der Tragvorrichtung ein, dessen flächige Erstreckung im Wesentlichen in Abstützrichtung des Kabelträgers weist. Eine Tragvorrichtung kann etwa L-, U-, oder C-förmig, etwa als Ausleger, ausgebildet sein und stützt einen Kabelträger etwa unterseitig ab. Dann greift die Befestigungsklammer in eine in Hochrichtung weisende Seitenwand der Tragvorrichtung ein.

In einem zweiten Schritt wird der Biegeabschnitt zumindest abschnittsweise über die Seitenwand des Kabelträgers, diese kontaktierend gebogen und damit plastisch deformiert. Die Seitenwand, respektive deren oberer Abschluss bildet die Biegeform. Durch den vorgesehenen Biegeprozess kontaktiert der Biegeabschnitt zumindest abschnittsweise den Abschnitt des oberen Abschlusses der Seitenwand, der von der Klammerrichtung gekreuzt wird. Das Umbiegen des Biegeabschnittes erfolgt etwa durch Aufbringen eines Biegedruckes flächig auf dem Biegeabschnitt, etwa durch ein händisches Herunterdrücken, sodass der Biegeabschnitt über die Seitenwand, respektive deren oberen Abschluss, getrieben wird. Denkbar ist auch das Ende des Biegeabschnittes etwa mit einer Zange zu greifen und den Biegeabschnitt durch Zugkraft, die Seitenwand als Gegenlager nutzend, umzubiegen. Durch das Treiben des Biegeabschnittes über den oberen Abschluss der Seitenwand richtet sich die Befestigungsklammer selbsttätig aus, sodass Biegeabschnitt und Abstützabschnitt im Wesentlichen in Klammerrichtung miteinander fluchten. Es versteht sich, dass jedenfalls der Biegeabschnitt, typischerweise die gesamte Befestigungsklammer aus einem Werkstoff, etwa einem Metallwerkstoff, typischerweise einem Fe-Werkstoff hergestellt ist, der eine plastische Deformation ohne wesentliche Festigkeitseinbußen zulässt und nur eine geringe Rückfederrate aufweist. Typischerweise ist die Befestigungsklammer aus einem korrosionsbeständigen Werkstoff hergestellt.

Die Tragvorrichtung stützt den Kabelträger zumindest abschnittsweise in einem Bereich ab, der auf einer gedachten Verbindungslinie in Klammerrichtung, beginnend an dem Abstützabschnitt, liegt. Die Abstützung Tragvorrichtung-Kabelträger ist somit zwischen den beiden Krafteinleitungspunkten - der Abstützung Abstützabschnitt-Tragvorrichtung einerseits und Biegeabschnitt-Kabelträger andererseits - angeordnet, sodass ein geschlossener Kraftpfad durch die Befestigungsklammer, die Tragvorrichtung und die Seitenwand des Kabelträgers bereitgestellt wird. Durch die auf einer Linie liegende Abstützung wird ein Verzug der Verbindung durch einen in einem Hebel resultierenden Versatz der Krafteinleitungspunkte vermieden. Typischerweise überlappen sich die die Abstützung bereitstellenden Bereiche quer zur Klammerrichtung, da ein oder mehrere Krafteinleitungspunkte flächenmäßig wirken. Typischerweise ist der Kontakt zwischen Tragvorrichtung und Abstützabschnitt flächenmäßig wesentlich kleiner als der Kontakt zwischen Biegeabschnitt und oberem Abschluss der Seitenwand.

Durch das Umbiegen wird der Kabelträger bei der Montage auf die Tragvorrichtung aufgedrückt und in dieser aufgedrückten Stellung gehalten. Die Rückstellung des Biegeabschnittes ist als gering einzustufen. Bevorzugt ist vorgesehen, dass ausgehend von dem Abstützabschnitt bis zu Beginn des Biegeabschnittes die Befestigungsklammer ohne Verkröpfungen ausgestaltet ist. Eine solche Verkröpfung wirkt elastisch, was nach dem vorgesehenen Umbiegen zu einem Setzen der Verbindung führen kann, woraufhin die Verbindung nach einer bestimmten Zeit loser wird. Die durch die Umformung eingebrachte Kraft würde sich verringern.

Durch die vorgeschlagene Verbindung "Tragvorrichtung-Kabelträger" mittels der erfindungsgemäßen Befestigungsklammer ist ein Verschieben des Kabelträgers in Längsrichtung der Tragvorrichtung auf der Tragvorrichtung sicher unterbunden: Hierfür müsste die durch eine mögliche Verschiebung seitlich in die Befestigungsklammer eingeleitete Kraft in eine auf den Biegeabschnitt einwirkende Zugkraft umgewandelt werden, die den während der Montage stattgefundenen Biegeprozess rückgängig machen müsste, sodass sich der Biegeabschnitt aufbiegt und den Kabelträger freigibt. Dies ist aufgrund der hohen Reibungswiderstände ohne mutwilliges Dazutun quasi ausgeschlossen.

Auch ein Verschieben des Kabelträgers in dessen Verlaufsrichtung ist unterbunden, da bei einem solchen Belastungsfall der Biegeabschnitt die Befestigungsklammer in Zugrichtung ziehen würde, wogegen der Abstützabschnitt, die Befestigungsklammer gegenüber der Tragvorrichtung abstützend, wirkt. Insgesamt wird der Kabelträger in der Befestigungsklammer verkanten.

Somit ist der Kabelträger auf der Tragvorrichtung durch die Befestigungsklammer sicher gehalten.

Weiters können durch den Umstand, dass der Biegeabschnitt erst bei der Montage unter Rücksichtnahme auf die vorliegende Seitenwand des zu befestigenden Kabelträgers gebogen und plastisch deformiert wird, mit der gleichen Befestigungsklammer bezüglich der Geometrie der Seitenwand sich unterscheidende Kabelträger befestigt werden, wobei sich deren Seitenwände nicht nur in ihrer Höhe, sondern auch in ihrer Breite unterscheiden können. So können Kabelrinnen und Kabelleitern mit komplexen Seitenholmen genauso befestigt werden, wie einfache Gitterrinnen.

Im Auslieferungszustand ist der Biegeabschnitt typischerweise eben und unverformt, sodass eine optimale Anpassung des Biegeabschnittes an die Seitenwand erfolgen kann.

Bevorzugt ist vorgesehen, dass der Biegeabschnitt und der Abstützabschnitt auf eine solche Weise zueinander angeordnet sind, dass die vorgesehene Biegekante des Biegeabschnittes im Wesentlichen rechtwinklig zu seiner Längserstreckung ist; der Biegeabschnitt folgt mit seiner Erstreckung der vorgesehenen Biegung. Dies erleichtert die Montage.

Der Biegeabschnitt kann unterstützend funktionsgerecht ausgestaltet sein. Hierzu kann der Biegeabschnitt über zumindest eine Materialschwächung, etwa eine der vorgesehenen Biegung folgende Aussparung verfügen. Hierdurch kann ein Biegeabschnitt bereitgestellt werden, der quer zur Biegung breit ist, und trotzdem leicht gebogen werden kann.

Ferner kann der Biegeabschnitt ein oder mehrere voneinander getrennte, der vorgesehenen Biegung folgende Biegezonen aufweisen, die gegenüber dem restlichen Biegeabschnitt weicher zu biegen sind. Diese Biegezonen sind dergestalt angeordnet, dass sie bezüglich einer Seitenwand eines zu befestigenden Kabelträgers dort angeordnet sind, an der eine Radiusänderung während der Umformung vorgesehen, bzw. typischerweise zu erwarten und/oder die Funktion des Haltens an der Seitenwand voraussichtlich nicht maßgeblich ist. Letzteres ist etwa in dem ersten, bis 90° Biegung reichenden Teil des Biegeabschnittes, wenn montiert, der Fall.

Umgebogen wird der Biegeabschnitt zumindest über einen Winkel von > 90°, typischerweise 100°, 140° oder 180°. Bei entsprechender Formgebung der Seitenwand - etwa bei einem hinterschnittenen C-Profil - kann der Biegeabschnitt auch dem Hinterschnitt der Seitenwand folgen und so insgesamt eingerollt, mithin über einen Winkel von 180° hinaus, etwa um 360° umgebogen werden. Umso weiter der Biegeabschnitt umgebogen wird, desto stabiler ist die Verbindung gegen ein Aufklaffen.

Um eine Biegung des Biegeabschnittes der an der Tragvorrichtung befestigten Befestigungsklammer zu vereinfachen, ist der Abstützabschnitt bevorzugt nicht nur dazu ausgelegt, die Befestigungsklammer an der Tragvorrichtung in Klammerrichtung formschlüssig abzustützen, sondern typischerweise auch dahingehend, dass er die Befestigungsklammer auch entgegen der durch die Biegung eingeleitete Kraft, insbesondere zu Beginn der Biegung, an der Tragvorrichtung formschlüssig lagert, sodass während des Umbiegens des Biegeabschnittes ein Widerlager bereitgestellt ist. Dies erfolgt bevorzugt mit einer anderen Seite des Abstützabschnittes als derjenigen, mit der die Abstützung in Klammerrichtung bereitgestellt ist, sodass der Abstützabschnitt zum indest zwei quer zueinander angeordnete Abstützflächen aufweist. Tragvorrichtungsseitig bietet es sich an, eine entsprechende Aussparung, deren Kontur entsprechend Abstützflächen bereitstellt, vorzusehen: In Klammerrichtung und quer hierzu, entgegen der Biegung.

Diese Ausgestaltung ist eine besonders stabile und einfach herzustellende Ausgestaltung, wenn die Befestigungsklammer aus einem im Wesentlichen ebenen Blech hergestellt ist. Der Abstützabschnitt ist dann durch die Kontur des Bleches bereitgestellt; der Biegeabschnitt wird in Tiefenrichtung des Bleches umgebogen. Die flächige Erstreckung des Biegeabschnittes im Auslieferungszustand und die flächige Erstreckung des Abstützabschnittes, das Widerstandsmoment bereitstellend, welches in Richtung Kabelträger, und somit in Längsrichtung, wirkt, sind gleich orientiert. Durch den Einsatz eines Bleches wird in geschickter Weise der Umstand ausgenutzt, dass dieses einerseits ein hohes Widerstandsmoment parallel zu seiner flächigen Erstreckung (für den Abstützabschnitt zu dem Kabelträger weisend) und ein kleines quer zu seiner flächigen Erstreckung (für eine einfache Biegung des Biegeabschnittes) bereitstellt. Eine solche Befestigungsklammer ist typischerweise mit ihrer flächigen Erstreckung parallel zu der Seitenwand des zu befestigenden Kabelträgers ausgerichtet und greift in eine in Längserstreckung der Tragvorrichtung weisende Seitenwand der Tragvorrichtung ein.

Der Abstützabschnitt kann nach Art eines Hakens oder eines Hammerkopfes ausgebildet sein. Bei der Ausbildung als Haken ist typischerweise vorgesehen, den Einhakabschnitt mit seiner Erstreckung parallel zu der Klammerrichtung zu versetzen. Im Übergang zu dem Biegeabschnitt ist der Einhakabschnitt dann etwa S-förmig ausgestaltet, mit seiner Erstreckung auf die Klammerrichtung zurückkommend. So kann vorgesehen sein, die Befestigungsklammer außerhalb des durch die Tragvorrichtung eingenommenen Raumes anzuordnen, etwa dergestalt, dass der als Haken ausgestaltet Abstützabschnitt von außen in die Tragvorrichtung eingreift. Der Einhakabschnitt führt dann um die Tragvorrichtung herum.

Zur Bereitstellung einer Befestigungsklammer für verschiedene Kabelträger, deren Seitenwände unterschiedliche Nennhöhen aufweisen, kann vorgesehen sein, den Biegeabschnitt entsprechend lang auszugestalten. Während der Biegeabschnitt für eine erste Seitenwandnennhöhe in einem ersten Bereich gebogen wird, ist dies für eine zweite Seitenwandnennhöhe in einem anderen Bereich ermöglicht.

Alternativ oder auch ergänzend hierzu kann vorgesehen sein, dass der Einhakabschnitt über zwei oder mehr in Klammerrichtung beabstandet angeordnete Abstützabschnitte verfügt, die grundsätzlich jeweils auf derselben Höhe bezüglich der Tragvorrichtung in die Tragvorrichtung eingreifen können, sodass der Abstand zwischen dem die Befestigungsklammer abstützenden Abstützabschnitt an der Tragvorrichtung und dem Ende des Befestigungsabschnittes durch Wahl eines geeignet angeordneten Abstützabschnittes entsprechend der benötigten Länge eingestellt werden kann. Grundsätzlich denkbar ist auch, dass mehrere Abstützabschnitte gleichzeitig in die Tragvorrichtung eingreifen und so die Befestigungsklammer an der Tragvorrichtung an mehreren Stellen abstützen.

Bevorzugt ist vorgesehen, die Befestigungsklammer einstückig vorzusehen. Durch die mögliche einfache Geometrie der Befestigungsklammer kann vorgesehen sein, dass die Befestigungsklammer aus einem Blech gestanzt ist, wobei bevorzugt kein Umformprozess notwendig ist.

Zur Montage eines Kabelträgers auf einer Tragvorrichtung können zwei Befestigungsklammern vorgesehen sein, die auf je einer Seite des Kabelträgers denselben mit der Tragvorrichtung verbinden. Auf diese Weise wird ein Wegklappen des Kabelträgers auf der Tragvorrichtung verhindert.

Für eine verbesserte Krafteinleitung kann vorgesehen sein, dass die eine Befestigungsklammer von einer ersten Seite von außen in die Tragvorrichtung eingreift oder diese untergreift und die andere Befestigungsklammer von der gegenüberliegenden Seite, sodass in einer Draufsicht der Kabelträger bezüglich der Tragvorrichtung diagonal verspannt ist.

Die Erfindung wird anhand eines Ausführungsbeispiels näher erläutert. Es zeigen:
- **Fig. 1:**: Eine Befestigungsklammer,
- **Fig. 2:**: Eine dreidimensionale Ansicht eines Kabeltragsystems, an dessen Tragvorrichtung eine Befestigungsklammer nach Figur 1 montiert und noch im Auslieferungszustand ist,
- **Fig. 3 und 4:**: Dreidimensionale Ansichten eines Kabeltragsystems mit einer vollständig montierten Befestigungsklammer nach Figur 1 und
- **Fig. 5:**: Eine dreidimensionale Ansicht eines alternativen Kabeltragsystems, welches sich von dem zuvor gezeigten bezüglich seines Kabelträgers unterscheidet.

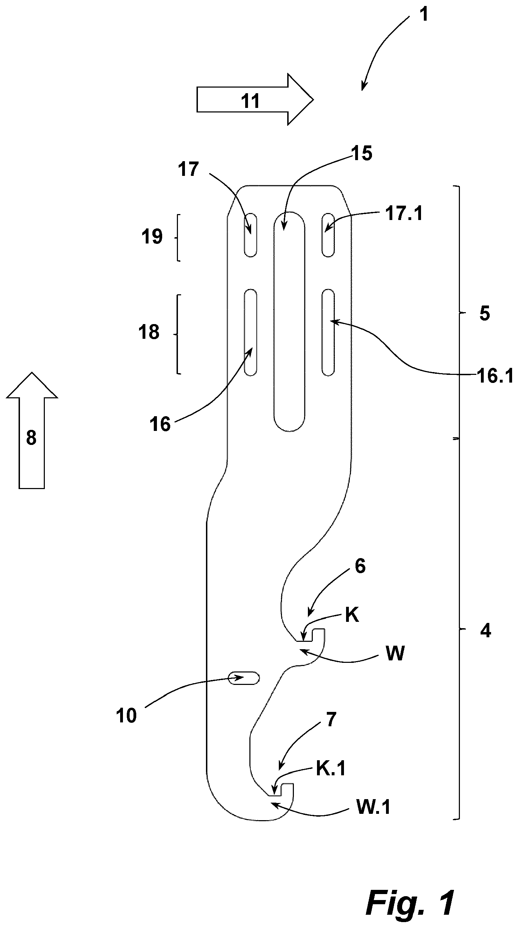

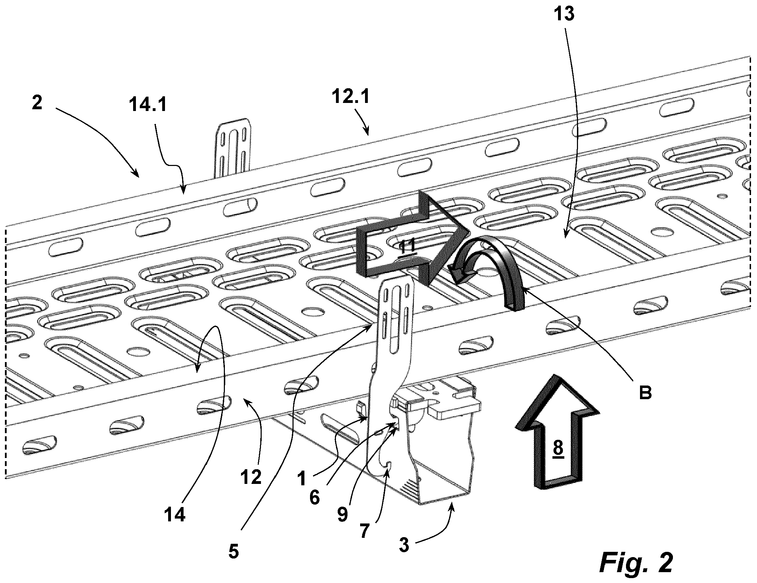

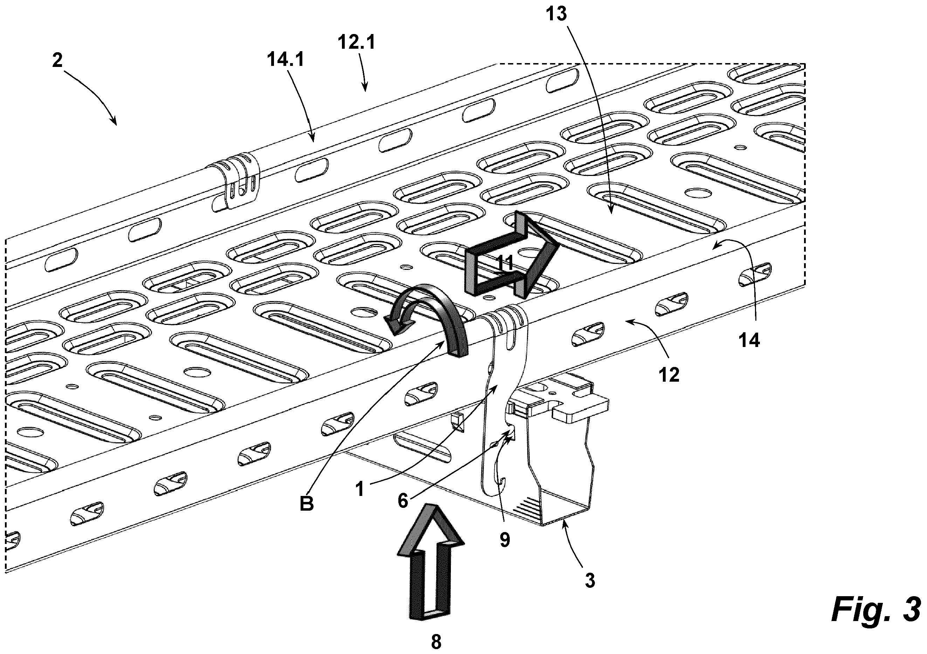

Figur 1 zeigt eine Befestigungsklammer 1 in ihrem Auslieferungszustand. Figur 2 zeigt ein Kabeltragsystem, wobei zwei Befestigungsklammern 1 nach Figur 1 an einer Tragvorrichtung 3 montiert sind und sich noch wie im Auslieferungszustand befinden. Die Figuren 3 bis 5 zeigen Kabeltragsysteme, bei denen die Befestigungsklammern 1 einen Kabelträger 2, 2a auf einer Tragvorrichtung 3 befestigen.

Für dieselben Teile werden gleiche Bezugszeichen verwendet. Nachstehend wird bezüglich der Figuren 2 bis 5 nur eine der beiden Befestigungsklammern näher erläutert und entsprechend mit Bezugszeichen bezeichnet; die andere Befestigungsklammer ist identisch aufgebaut.

Die Befestigungsklammer 1 in Figur 1 ist in ihrem Auslieferungszustand in einer Ebene. Sie ist durch einen Stanzprozess aus einem bandverzinkten Stahlblechabschnitt hergestellt (s. etwa Figur 2 für die Dicke der Befestigungsklammer 1). Auch ein Herstellen aus einem Edelstahl ist denkbar.

Die Befestigungsklammer 1 weist einen Einhakabschnitt 4, davon abragende Abstützabschnitte 6, 7 und einen Biegeabschnitt 5 auf. Der Einhakabschnitt 4 schließt sich an den Biegeabschnitt 5 an. Die Befestigungsklammer 1 ist einstückig ausgestaltet.

Die beiden Abstützabschnitte 6, 7 sind in diesem Ausführungsbeispiel als Haken ausgeführt. Sie sind in vorgesehener Klammerrichtung 8 der Befestigungsklammer 1 voneinander beabstandet und ragen in Querrichtung 11 von dem Einhakabschnitt 4 ab. Beide Abstützabschnitte 6, 7 fluchten mit dem Biegeabschnitt 5 in der vorgesehenen Klammerrichtung 8. Sie verfügen über eine erste Abstützfläche K, K.1 zum Abstützen in Klammerrichtung 8 und eine zweite, zu der ersten Abstützfläche K, K.1 quer angeordnete Abstützfläche W, W.1 zum Abstützen entgegen der vorgesehenen Biegung, somit ein Widerlager bildend. Der Einhakabschnitt 4 ist parallel versetzt zu der vorgesehenen Klammerrichtung 8 angeordnet und verbindet die Abstützabschnitte 6, 7 mit dem Biegeabschnitt 5.

Der Biegeabschnitt 5 ist dazu ausgelegt, durch eine auf seine Fläche einwirkende Kraft umgebogen zu werden.

Wie in Figuren 2 bis 4 ersichtlich, stützt einer der beiden Abstützabschnitte 6, 7, hier der erste Abstützabschnitt 6, die Befestigungsklammer 1 entgegen der Klammerrichtung 8 an der Tragvorrichtung 3 ab, indem der Abstützabschnitt 6 in eine Aussparung 9 der Tragvorrichtung 3 eingreift. Die Aussparung 9 ist in einen Schenkel der in ihrem Querschnitt C-förmig ausgebildeten, nach oben offenen Tragvorrichtung 3 eingebracht, somit in einen in Hochrichtung weisenden Abschnitt der Tragvorrichtung 3.

Figur 2 zeigt ein Kabeltragsystem in einer dreidimensionalen Ansicht während des Montageprozesses. Der Kabelträger 2, hier als Kabelrinne ausgeführt, liegt auf der Tragvorrichtung 3 auf; die Tragvorrichtung 3 stützt den Kabelträger 2 unterseitig ab. Der Kabelträger 2 weist in diesem Ausführungsbeispiel zwei als Seitenholme ausgebildete Seitenwände 12, 12.1 auf, die mit einem Boden 13 verbunden sind. Zwischen die beiden Seitenwände 12, 12.1 und auf dem Boden 13 aufliegend können Kabel und Leitungen gelegt werden. Die beiden Seitenwände 12, 12.1 sind aus einem Blech gefertigt und in ihrem oberen Abschluss 14, 14.1, der gleichzeitig das obere Ende der Seitenwände 12, 12.1 ist, eingerollt, mithin hinterschnitten.

Im Auslieferungszustand ist der Biegeabschnitt 5 der Befestigungsklammer 1 in einer Ebene mit dem an den Biegeabschnitt 5 grenzenden Bereich des Einhakabschnittes 4 als auch mit dem bzw. den Abstützabschnitten 6, 7; in diesem Ausführungsbeispiel ist die gesamte Befestigungsklammer 1 in einer Ebene.

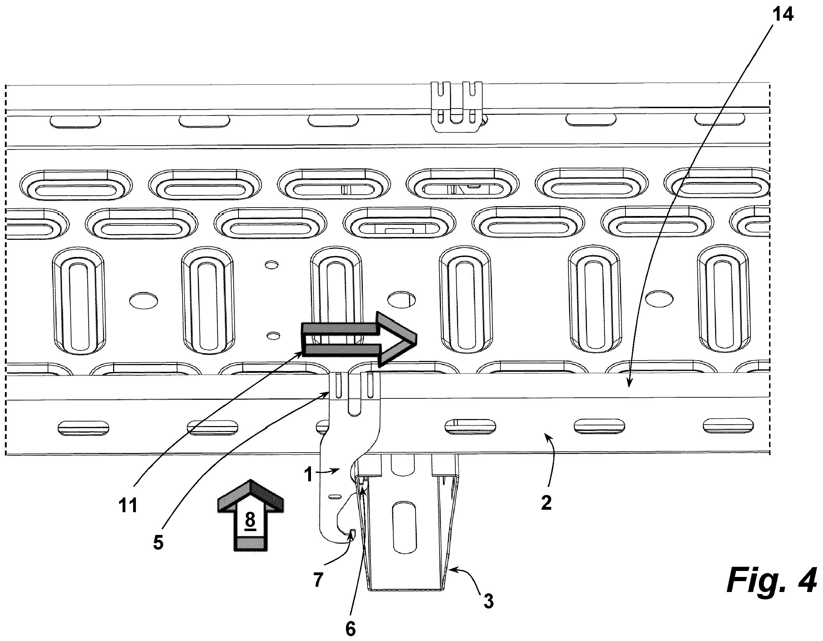

Nachdem die Befestigungsklammer 1 an der Tragvorrichtung 3 montiert ist, hier: durch die hakenartige Ausgestaltung des Abstützabschnittes 6, 7 in die Aussparung 9 eingeschwenkt ist, muss darauf geachtet werden, dass die Befestigungsklammer 1 während des Umformens anfänglich in Klammerrichtung 8 weist und bezüglich ihrer Abstützung an der Tragvorrichtung 3 auf Spannung gehalten wird. Dann wird der Biegeabschnitt 5 über die Seitenwand 12, 12.1 in Biegerichtung B gebogen, bzw. über den oberen Abschluss 14, 14.1 der Seitenwand 12, 12.1 getrieben (s. Figuren 3 und 4).

Für eine intuitive Montage folgt die Längserstreckung des Biegeabschnittes 5 der Biegerichtung B, sodass die Biegekante quer zu der Längserstreckung des Biegeabschnittes 5 ist. Der Biegeabschnitt 5 kann in diesem Ausführungsbeispiel händisch umgebogen werden.

Durch das Umbiegen des Biegeabschnittes 5 wird der an der Tragvorrichtung 3 abgestützte Einhakabschnitt 4 auf Zug beansprucht; hierdurch wird der Kabelträger 2 auf der Tragvorrichtung 3 zusätzlich aufgedrückt und die Befestigungsklammer 1 richtet sich so aus, dass der die Befestigungsklammer 1 an der Tragvorrichtung 3 abstützende Abstützabschnitt 6 und der Biegeabschnitt 5 in Klammerrichtung 8 fluchten - in der Richtung des kürzesten Abstandes. Somit umklammert die Befestigungsklammer 1 die Tragvorrichtung 3 und den Kabelträger 2.

Zum Vereinfachen des Biegevorganges des Biegeabschnittes 5 ist dieser mit Aussparungen 15, 16, 16.1, 17, 17.1 ausgestattet (s. Figur 1). Eine erste Aussparung 15 erstreckt sich über den Biegeabschnitt 5 in vorgesehener Biegerichtung B desselben. Seitlich hierzu sind in Biegerichtung B voneinander beabstandet weitere Aussparungen 16, 17; 16.1, 17.1 angeordnet. Diese zusätzlichen Aussparungen bewirken eine lokale Schwächung des Biegeabschnittes 5, zwei Biegezonen 18, 19 ausbildend.

Mit Blick auf die Figuren 3 und 4 wird deutlich, dass die erste Biegezone 18 den Biegevorgang bis etwa 100° im Anfangsbereich vereinfacht. Der der Biegezone 18 folgende Abschnitt des Biegeabschnittes 5 ist fester ausgestaltet und ragt formschlüssig über den oberen Abschluss 14, 14.1 der Seitenwand 12, 12.1 des Kabelträgers 2 hinüber. Hierdurch wird ein Formschluss sichergestellt.

Die zweite Biegezone 19 ist in einem Bereich angeordnet, der nach dem ersten Biegen im Bereich des unteren Abschlusses des C-förmigen Profils der Seitenwand 12, 12.1 anliegt. Hier nicht dargestellt, aber möglich ist es, den Biegeabschnitt 5 in diesem Bereich um das C-förmige Profil weiter zu biegen und so den Biegeabschnitt 5 insgesamt einzurollen.

Zum Biegen des Biegeabschnittes 5 ist die Befestigungsklammer 1 mit dem Abstützabschnitt 6 nicht nur in Klammerrichtung 8, sondern auch entgegen der Biegerichtung B an der Tragvorrichtung 3 in der Aussparung 9 formschlüssig gelagert. Die Abstützabschnitte 6, 7 ragen von dem Einhakabschnitt 4 nicht nur in eine Richtung ab, die quer zur Klammerrichtung 8 ist, sondern liegen auch in einer Ebene mit dem Biegeabschnitt 5, wenn die Befestigungsklammer 1 in ihrem Auslieferungszustand ist.

Sollte der zweite Abstützabschnitt 7 in einem bestimmten Anwendungsfall als störend, weil die Befestigungsklammer 1 insgesamt verlängernd, empfunden werden, kann dieser im Bereich der Materialschwächung, hier in Form einer in Querrichtung 11 der Befestigungsklammer 1 weisenden Aussparung 10 als Perforation, abgebogen oder abgetrennt werden.

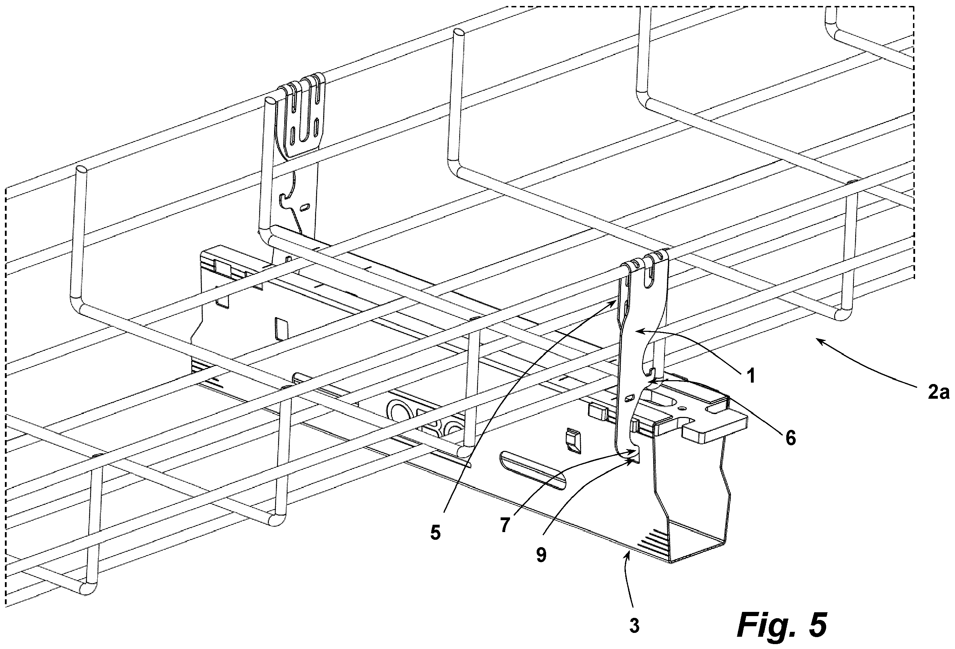

Figur 5 zeigt dieselbe Tragvorrichtung 3 und dieselbe Befestigungsklammer 1, jedoch ein Kabeltragsystem ausbildend in Verbindung mit einem alternativen Kabelträger 2a, nämlich eine Gitterrinne. Dieser Kabelträger 2a unterscheidet sich von dem zuvor beschrieben Kabelträger 2 durch eine andere Geometrie der Seitenwand 12a, 12a.1, und zwar sowohl bezüglich deren Breite als auch deren Nennhöhe. Der höheren Nennhöhe der Seitenwand 12a, 12a.1 des Kabelträgers 2a Rechnung tragend, greift die Befestigungsklammer 1 mit ihrem zweiten Abstützabschnitt 7 des Einhakabschnittes 4 in die Aufnahme 9 der Tragvorrichtung 3 ein und ist so gegenüber der Tragvorrichtung 3 abgestützt; die Biegung des Biegeabschnittes 5 zur Befestigung des Kabelträgers 2a auf der Tragvorrichtung 3 erfolgt auf gleiche Weise.

Durch die bereitgestellte Befestigungsklammer 1 ist eine herstellerseitige Anpassung des Biegeabschnittes 5 nicht notwendig; der Biegeabschnitt 5 kann über die Seitenwand 12a, 12a.1 einer solchen Gitterrinne problemlos umgebogen werden.

Die Erfindung ist anhand von zwei Ausführungsbeispielen erläutert worden. Ohne den Schutzbereich, beschrieben durch die Ansprüche, zu verlassen, ergeben sich für den Fachmann zahlreiche weitere Möglichkeiten, den Erfindungsgedanken umzusetzen, ohne dass diese im Rahmen dieser Ausführungen näher erläutert werden müssten.

### Bezugszeichenliste

- 1: Befestigungsklammer
- 2, 2a: Kabelträger
- 3: Tragvorrichtung
- 4: Einhakabschnitt
- 5: Biegeabschnitt
- 6, 7: Abstützabschnitt
- 8: Klammerrichtung
- 9: Aussparung
- 10: Aussparung
- 11: Querrichtung
- 12, 12.1, 12a, 12a.1: Seitenwand
- 13: Boden
- 14, 14.1: Oberer Abschluss der Seitenwand
- 15: Aussparung
- 16, 16.1: Aussparung
- 17, 17.1: Aussparung
- 18, 19: Biegezone

- B: Biegerichtung
- K, K. 1: erste Abstützfläche
- W, W.1: zweite Abstützfläche

## Patentansprüche

1. Befestigungsklammer (1) für ein Tragsystem mit einer ein Langelement, etwa einem Kabelträger (2, 2a), tragenden Tragvorrichtung (3), wobei die Befestigungsklammer (1) einen Einhakabschnitt (4) mit einem davon abragenden Abstützabschnitt (6, 7) zum Eingreifen in die Tragvorrichtung (3) oder zum Untergreifen der Tragvorrichtung (3) aufweist, welcher Abstützabschnitt (6, 7) zum formschlüssigen Abstützen der Befestigungsklammer (1) an der Tragvorrichtung (3) in Klammerrichtung (8) ausgelegt ist, wobei die Befestigungsklammer (1) einen Biegeabschnitt (5) aufweist, der mit dem Abstützabschnitt (6, 7) in vorgesehener Klammerrichtung (8) der Befestigungsklammer (1) zumindest abschnittsweise fluchtet und bei einer Montage zum Befestigen eines Langelementes an einer Tragvorrichtung (3) bei in die Tragvorrichtung (3) eingreifenden oder diese untergreifenden Abstützabschnitt (6, 7) über einen oberen Abschluss (14, 14.1) des Langelementes unter plastischer Deformation gebogen wird, **dadurch gekennzeichnet, dass** der Abstützabschnitt (6, 7) von dem Einhakabschnitt (4) quer zur vorgesehenen Biegung des Biegeabschnittes (5) abragt.

2. Befestigungsklammer nach Anspruch 1, **dadurch gekennzeichnet, dass** der Abstützabschnitt (6, 7) und der Biegeabschnitt (5) blechartig ausgeführt sind und ihre jeweilige flächige Erstreckung im Auslieferungszustand zueinander parallel ausgerichtet ist.

3. Befestigungsklammer nach einem der Ansprüche 1 bis 2, **dadurch gekennzeichnet, dass** der Biegeabschnitt (5) über zumindest eine typischerweise der Längserstreckung des Biegeabschnittes (5) folgende Materialschwächung, typischerweise eine Verjüngung des Materialquerschnittes oder eine Aussparung (15, 16, 16.1, 17, 17.1), verfügt.

4. Befestigungsklammer nach einem der Ansprüche 1 bis 3, **dadurch gekennzeichnet, dass** der Biegeabschnitt (5) zwei voneinander getrennte, in Längsrichtung (8) der Befestigungsklammer (1) angeordnete Biegezonen (18, 19) aufweist, die gegenüber dem restlichen Biegeabschnitt (5) weicher zu biegen sind.

5. Befestigungsklammer nach einem Ansprüche 1 bis 4, **dadurch gekennzeichnet, dass** der Abstützabschnitt (6, 7) nach Art eines Hakens oder eines Hammerkopfes ausgebildet ist.

6. Befestigungsklammer nach einem der Ansprüche 1 bis 5, **dadurch gekennzeichnet, dass** der Einhakabschnitt (4) über zwei in Klammerrichtung (8) beabstandet angeordnete Abstützabschnitte (6, 7) verfügt.

7. Befestigungsklammer nach einem der Ansprüche 1 bis 6, **dadurch gekennzeichnet, dass** der Biegeabschnitt (5) im Auslieferungszustand eben ist.

8. Befestigungsklammer nach einem der Ansprüche 1 bis 7, **dadurch gekennzeichnet, dass** die Befestigungsklammer (1) aus einem Blech freigestellt, etwa gestanzt ist.

9. Befestigungsklammer für ein Kabeltragsystem mit einem zumindest abschnittsweise eine Seitenwand (12, 12.1, 12a, 12a.1) aufweisenden Kabelträger (2, 2a) und mit einer einem Kabelträger (2, 2a) tragenden Tragvorrichtung (3) nach einem der Ansprüche 1 bis 8.

10. Kabeltragsystem, umfassend einen zumindest abschnittsweise eine Seitenwand (12, 12.1, 12a, 12a.1) aufweisenden Kabelträger (2, 2a) und eine den Kabelträger (2, 2a) unterseitig abstützende Tragvorrichtung (3), wobei der Kabelträger (2, 2a) an der Tragvorrichtung (3) mit zumindest einer Befestigungsklammer (1) nach einem der Ansprüche 1 bis 9 befestigt ist, wobei die Befestigungsklammer (1) mit ihrem Abstützabschnitt (6, 7) in die Tragvorrichtung (3) eingreifend oder diese untergreifend an der Tragvorrichtung (3) abgestützt ist und der Kabelträger (2, 2a) mit dem um einen oberen Abschluss (14, 14.1) der Seitenwand (12, 12.1, 12a, 12a. 1) des Kabelträgers (2, 2a) gebogenen Biegeabschnitt (5) der Befestigungsklammer (1) an der Tragvorrichtung (3) gehalten ist.

11. Kabeltragsystem nach Anspruch 10, **dadurch gekennzeichnet, dass** der Abstützabschnitt (6, 7) die Befestigungsklammer (1) quer zur vorgesehenen Biegung des Biegeabschnittes (5) an der Tragvorrichtung (3) mit einer Abstützfläche (W, W.1), die quer zu Klammerrichtung (8) ist, abstützt.

12. Kabeltragsystem nach einem der Ansprüche 10 oder 11, **dadurch gekennzeichnet, dass** der Abstützabschnitt (6, 7) in einen Abschnitt der Tragvorrichtung (3) eingreift, dessen flächige Erstreckung in die den Kabelträger (2, 2a) abstützende Richtung weist.

13. Kabeltragsystem nach einem der Ansprüche 10 bis 12, **dadurch gekennzeichnet, dass** die Tragvorrichtung (3) über eine Aussparung (9) verfügt, in die der Abstützabschnitt (6, 7) eingreift und in der der Abstützabschnitt (6, 7) in Klammerrichtung (8) und entgegen der vorgesehenen Biegekraft zum Umbiegen des Biegeabschnittes (5) über den oberen Abschluss (14, 14.1) der Seitenwand (12, 12.1, 12a, 12a.1) formschlüssig abgestützt ist.

14. Kabeltragsystem nach einem der Ansprüche 10 bis 13, **dadurch gekennzeichnet, dass** der Abstützabschnitt (6, 7) von außen in die Tragvorrichtung (3) eingreift.
